(19) Europäisches Patentamt
European Patent Office
Office européen des brevets

(11) **EP 4 632 507 A1**

(12) **DEMANDE DE BREVET EUROPEEN**

(43) Date de publication:
**15.10.2025   Bulletin 2025/42**

(21) Numéro de dépôt: **25168994.9**

(22) Date de dépôt: **08.04.2025**

(51) Classification Internationale des Brevets (IPC):
*G05B 17/02* [(2006.01)]   *G06Q 10/0637* [(2023.01)]
*G06Q 50/06* [(2024.01)]   *G06Q 10/04* [(2023.01)]

(52) Classification Coopérative des Brevets (CPC):
**G05B 17/02; G06Q 10/04; G06Q 10/0637; G06Q 50/06**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **12.04.2024   FR 2403786**

(71) Demandeur: **Commissariat à l'Energie Atomique et aux Energies Alternatives**
**75015 Paris (FR)**

(72) Inventeurs:
• **GAOUA, Yacine**
  **38054 Grenoble Cedex 09 (FR)**
• **VASSET, Nicolas**
  **38054 Grenoble Cedex 09 (FR)**

(74) Mandataire: **Cabinet Beaumont**
**4, Place Robert Schuman**
**B.P. 1529**
**38025 Grenoble Cedex 1 (FR)**

(54) **PROCEDE ET DISPOSITIF DE PILOTAGE D'UN RESEAU DE FLUIDE**

(57)      La présente description concerne un procédé d'estimation, par un dispositif de calcul, de paramètres de pilotage d'un réseau de fluide, depuis au moins un poste source vers au moins un poste de destination et par l'intermédiaire d'au moins une canalisation, le réseau comprenant au moins un robinet et/ou au moins un poste de détente, le procédé comprenant :

la détermination d'une configuration de l'au moins un robinet et/ou de l'au moins un poste de détente et/ou de l'au moins un poste source ;

l'initialisation de coefficients associés à l'au moins une canalisation ;

une première estimation des paramètres, sur la base de la configuration,

la mise à jour des coefficients sur la base de la première estimation ;

la recherche d'une nouvelle configuration sur la base des coefficients mis à jour ;

une deuxième estimation ; et

la fourniture de la deuxième estimation à un poste de pilotage.

Fig 3

EP 4 632 507 A1

**Description**

Domaine technique

La présente description concerne de façon générale le pilotage et/ou le réglage amélioré des réseaux fluidiques, tel que des réseaux de gaz et/ou des réseau de chaleur.

Technique antérieure

Un réseau fluidique, transportant par exemple du gaz ou de la chaleur comprend généralement un ensemble de canalisations et de nœuds. Chaque nœud correspond, entre autres, à :

- un organe de production, tel que par exemple, une station d'injection de biométhane ou d'un gaz de synthèse ou un poste de transport dans le cas d'un réseau de distribution de gaz ou tel qu'une centrale à gaz ou une centrale d'incinération de déchets ou de chaleur fatale dans le cas d'un réseau de chaleur ;
- un organe de distribution, tel qu'une station de détente et de compression, dans le cas d'un réseau de distribution de gaz ou un compresseur et un organe de détente tel qu'une vanne de régulation, dans le cas d'un réseau de chaleur ;
- un organe de raccordement ;
- un organe de coupure, tel qu'une vanne, un robinet, dans le cas d'un réseau de distribution de gaz ou d'un réseau de chaleur :
- un organe de consommation, tel qu'un client tertiaire ou un client résidentiel dans le cas d'un réseau de distribution de gaz, ou tel qu'une sous-station dans le cas d'un réseau de chaleur..

Dans le cas de réseaux de distribution de gaz, des postes de transport permettent de relier un réseau de transport de gaz national à un réseau de distribution de gaz. Le poste de transport récupère du gaz à très haute pression depuis le réseau de transport national et le détend pour ensuite l'injecter sur le réseau de distribution. A titre d'exemple, les réseaux de transport nationaux et les réseaux de distribution ne sont pas gérés par les mêmes entités.

Le pilotage d'un tel réseau consiste à rechercher un réglage, par exemple des pressions à exercer au niveau de nœuds concernés, permettant le transport du fluide depuis des postes sources vers des postes de destination. En particulier, le pilotage est recherché de sorte à satisfaire des contraintes de fonctionnement et de consommation tout en répondant à un ou plusieurs critères, tels que des critères métiers améliorant le fonctionnement du réseau, par exemple une baisse en pression du réseau, une augmentation d'une part d'un productible renouvelable, des critères de coût économique et/ou environnementaux, etc.

Cependant, la recherche d'un réglage d'un tel réseau est généralement réalisée par une approche systématique, notamment en suivant des règles expertes et, par exemple, en imposant des pressions maximales pour la plupart des postes. De plus, dans certains cas complexes, par exemple lorsque des postes d'injection de biométhane ou de gaz de synthèse sont mis en concurrence dans le réseau, des outils de simulation sont utilisés par la personne du métier afin de déterminer un réglage respectant les différentes contraintes. Les outils de simulation utilisés mettent généralement en œuvre plusieurs itérations de calculs successives.

De plus, la complexification des parcs d'injection pour un réseau donné, et en particulier l'augmentation du nombre de postes biométhane injectant, rend les approches précédemment citées trop complexes et trop longues à mettre en œuvre pour la personne du métier.

De plus, la complexité des approches précédemment citées est en partie due à la taille des réseaux. Les méthodes existantes ne permettent pas de trouver, de façon optimale, un réglage pour ces grands réseaux. Il existe un besoin d'améliorer les méthodes et procédés d'élaboration d'un pilotage amélioré pour des critères donnés.

Résumé de l'invention

Un mode de réalisation prévoit d'estimation, par un dispositif de calcul, de paramètres de pilotage et/ou de réglage d'un réseau configuré pour transporter un fluide, depuis au moins un poste source du réseau vers au moins un poste de destination du réseau et par l'intermédiaire d'au moins une canalisation, le réseau comprenant au moins un robinet et/ou au moins un poste de détente et/ou de compression, le procédé comprenant :

a) la détermination d'une configuration initiale des états binaires de l'au moins un robinet et/ou de l'au moins un poste de détente et/ou compression et/ou de l'au moins un poste source ;
b) l'initialisation de coefficients de perte de charges associés à l'au moins une canalisation ;
c) une première estimation des paramètres, sur la base de la configuration initiale,
d) la mise à jour, à postériori, des coefficients de perte de charges, par le dispositif de calcul, sur la base de la première estimation des paramètre ;

e) la recherche d'une nouvelle configuration des états binaires, sur la base des coefficients de perte de charge mis à jour ;

f) une deuxième estimation des paramètres, sur la base de la nouvelle configuration ; et

g) la fourniture de la deuxième estimation des paramètres à un poste de pilotage du réseau.

Selon un mode de réalisation, la première estimation s'effectue par résolution d'un problème de programmation non linéaire, par le dispositif de calcul, sur la base de la configuration initiale et d'un modèle de canalisation décrivant le réseau.

Selon un mode de réalisation, la configuration initiale correspond à une configuration dans laquelle l'au moins un robinet et/ou l'au moins un poste de détente et/ou compression et/ou l'au moins un poste source sont dans un état fixé, par exemple dans un état de fonctionnement, ou de non-fonctionnement.

Selon un mode de réalisation, le procédé ci-dessus comprend en outre, suite à l'étape d), une nouvelle réalisation de l'étape c) aboutissant à une nouvelle première estimation des paramètres, sur la base de la configuration initiale.

Selon un mode de réalisation, le procédé ci-dessus comprend en outre, suite à la réalisation de l'étape d) :

- le calcul, par le dispositif de calcul, d'une première valeur d'erreur associée à la première estimation des paramètres ;
- la comparaison de la première valeur d'erreur avec une première valeur seuil ; et
- si la première valeur d'erreur est supérieure à la première valeur seuil, une nouvelle réalisation de l'étape c).

Selon un mode de réalisation, la recherche de la nouvelle configuration s'effectue par résolution d'un problème de programmation non linéaire en nombres entiers mixtes, par le dispositif de calcul, sur la base des coefficients de perte de charge mis à jour.

Selon un mode de réalisation, le procédé ci-dessus comprend en outre, suite à la réalisation de l'étape e) :

- le calcul, par le dispositif de calcul, d'une valeur d'objectif associée à la nouvelle configuration ;
- la comparaison de la valeur d'objectif avec une valeur d'objectif associée à la configuration initiale ; et
- si la valeur d'objectif associée à la nouvelle configuration est meilleur que la valeur d'objectif associée à la configuration initiale, la reprise du procédé dans une nouvelle réalisation de l'étape c), avec comme configuration initiale la nouvelle configuration.

Selon un mode de réalisation, les valeurs d'objectif sont calculées, par le dispositif de calcul, sur la base d'une fonction objectif associée au problème de programmation non linéaire en nombres entiers mixtes.

Selon un mode de réalisation, le procédé ci-dessus comprend en outre, suite à l'étape e), une nouvelle mise à jour des coefficients de perte de charge, sur la base de la nouvelle configuration.

Selon un mode de réalisation, le réseau est un réseau de gaz comprenant, par exemple, au moins 500 canalisations.

Selon un mode de réalisation, le réseau est un réseau de chaleur comprenant, par exemple, au moins 500 canalisations.

Selon un mode de réalisation, les paramètres correspondent à des valeurs de pression et/ou débit au niveau de l'au moins un poste sources et des valeurs de pression au niveau de l'au moins un poste de détente et/ou compression.

Un mode de réalisation prévoit un dispositif de calcul comprenant :

- une mémoire non volatile configurée pour stocker des instructions implémentant le procédé d'estimation de paramètres de pilotage et/ou de réglage d'un réseau selon le procédé ci-dessus ;
- un processeur configuré pour exécuter les instructions ;
- une interface configurée pour fournir les paramètres estimés à un dispositif de contrôle du réseau.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de manière très schématique, un exemple de réseau configuré pour transporter un fluide ;

la figure 2 est un schéma par blocs illustrant un dispositif de calcul, selon un mode de réalisation de la présente description ;

la figure 3 est un organigramme illustrant des étapes d'un procédé de pilotage, selon un mode de réalisation de la présente description ;

la figure 4 est un organigramme illustrant des étapes d'un premier niveau dans le procédé de pilotage, selon un mode de réalisation de la présente description ; et

la figure 5 est un organigramme illustrant des étapes d'un deuxième niveau dans le procédé de pilotage, selon un mode de réalisation de la présente description.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les méthodes de résolutions de problèmes de type NLP (de l'anglais « Non Linear Programming ») ou de type MINLP (de l'anglais « Mixed Integer Non Linear Programming ») sont connues par la personne du métier et ne sont pas décrites en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

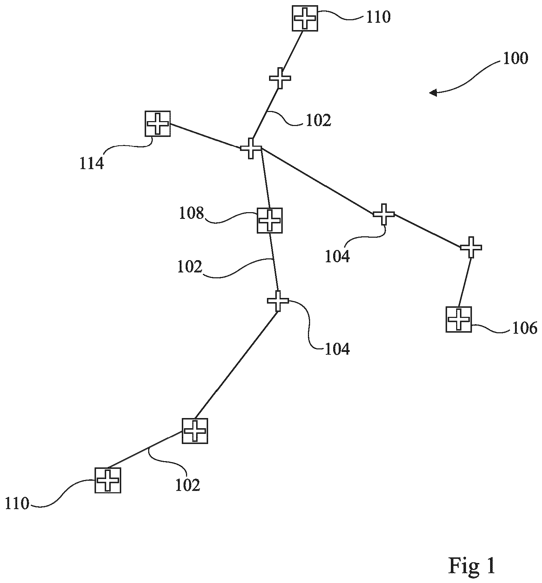

La figure 1 représente, de manière très schématique et simplifiée, un exemple d'un réseau 100 configuré pour transporter un fluide. Dans certains exemples, le réseau 100 est un réseau maillé. Le réseau 100 comprend par exemple au moins une canalisation 102. Par soucis de clarté, le réseau 100 illustré comprend un nombre restreint de canalisations 102. Cependant, de manière générale, le réseau 100 est de taille relativement grande et comprend par exemple au moins 500 canalisations 102. A titre d'exemple, le réseau 100 comprend au moins 1000 ou 1500 canalisations 102.

Le réseau 100 comprend en outre des nœuds, chaque nœud étant relié à un ou plusieurs autres nœuds par l'intermédiaire d'une ou plusieurs canalisations. Chaque nœud correspond, par exemple, à un type de fonctionnalité du réseau. Certains nœuds sont, par exemple, des vannes 104, ou encore des robinets, configurés pour permettre ou non le passage du fluide entre les canalisations 102 qu'ils desservent. D'autres nœuds sont des postes sources 106. A titre d'exemple, les postes sources 106 sont des postes de production ou des postes de transport acheminant par exemple du gaz, venant d'un réseau de transport, vers un réseau de distribution. Dans le cas d'un réseau de distribution de gaz, un poste source 106 est un poste biométhane produisant du gaz « vert » ou un poste de transport. En particulier, les postes sources 106 comprennent un sous ensemble des postes biométhane et un sous ensemble des postes de transport. Dans certains cas, le réseau ne comprend, par exemple, pas de postes biométhanes. Dans le cas d'un réseau de chaleur, un poste source 106 correspond, par exemple, à une usine d'incinération de déchet, à une centrale à gaz et/ou à une source de chaleur fatale.

Certains autres nœuds sont, par exemple, des postes de consommation, ou point de fourniture/livraison, 108. A titre d'exemple, un poste de destination correspond à une arrivée du fluide chez un client, tel qu'un particulier ou une collectivité.

D'autres nœuds correspondent par exemple à des postes de détente et/ou compression 110 configurés pour détendre et/ou compresser le gaz.

De manière générale, chaque nœud du réseau 100 est soit dans un état de fonctionnement ou de non fonctionnement, ou dans une position, fermée ou ouvert dans le cas des vannes 104. Autrement dit, l'état de chaque nœud est décrit par une valeur binaire. Une configuration du réseau correspond alors à la description de l'état de chaque nœud de type robinet 104, poste source 106 et poste de distribution 110 du réseau 100. Dans le cas d'un réseau 100 comprenant un nombre $N$ de tels nœuds, il existe donc $2^N$ configurations possibles du réseau 100.

Un pilotage du réseau 100 consiste à acheminer le fluide depuis le ou les postes source 106 vers un ou plusieurs postes 108 en passant par des postes de distribution 110 et/ou robinets 104 en respectant une demande en débit et en pression exigée par le ou les postes de consommation 110. Dans un exemple, le réseau 100 correspond à un poste rebours et le gaz est injecté depuis le réseau de distribution vers le réseau de transport en passant par un poste de distribution 110 de type station de compression. Cet exemple s'applique en cas d'une surproduction des stations biométhane, par exemple en été, lorsque la demande du réseau est faible et que l'opérateur du réseau s'est engagé aupres des gestionnaires des stations biométhanes sur une garantie de fourniture contractuelle.

De plus, il est souhaitable que le pilotage de réseau 100 réponde à certains critères, tels que par exemple, des critères relatifs au coût économique du fonctionnement du réseau 100 et/ou des critères environnementaux. A titre d'exemple, dans le cas où le réseau 100 est un réseau de gaz, un critère environnemental correspond au verdissement du réseau en favorisant l'injection dites « vertes » de biométhane, par les postes de production tels que des stations biométhane, dans le réseau. Le critère correspond alors, par exemple, à un taux de biométhane injecté. Dans un autre exemple, le critère consiste à satisfaire un ensemble d'objectifs et contraintes métier sur le réglage du réseau 100, tels que, par exemple, faire baisser la pression du réseau, et/ou maximiser le nombre de postes de production « non-verts » en veille, c'est à dire minimiser le nombre de postes « non-verts » en état de fonctionnement, etc.

De manière générale, ces critères sont décrits par une fonction multi-objectif du réseau 100. Un pilotage amélioré du réseau 100 consiste alors, par exemple, à trouver une configuration, parmi les $2^N$ configurations possibles et les pressions et débits à appliquer au niveau des postes sources 106 et les pressions à appliquées au niveau des postes de détente et/ou compression 110 tout en répondant au maximum aux critères.

La complexité de la recherche d'un pilotage amélioré vient d'une part du grand nombre de configurations possible, lorsque le nombre $N$ est grand, par exemple supérieur à 10 et, d'autre part, du phénomène de perte de charge ayant lieu lors du transport du fluide dans le réseau 100. Le phénomène de perte de charge est causé par les frottements subis par le fluide contre les parois des canalisations. Ces frottements, associés à des phénomènes de turbulences dans le fluide, causent une perte de pression, appelée perte de charge. Les modèles décrivant le phénomène de perte de charge sont des modèles décrivant des relations fortement non-linéaires entre des variables physiques et rendent, par conséquent, la recherche d'un pilotage amélioré difficile.

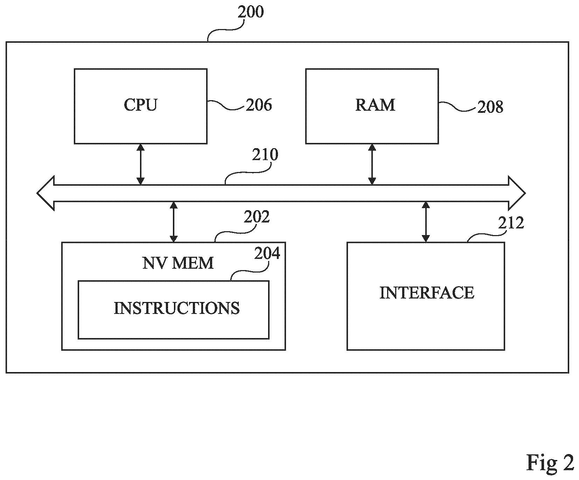

La figure 2 est un schéma par blocs illustrant un dispositif de calcul 200, selon un mode de réalisation de la présente description.

Le dispositif de calcul 200 comprend, par exemple, une mémoire non volatile 202 (NV MEM) configurée pour stocker, par exemple, des instructions 204 (INSTRUCTIONS). A titre d'exemple, les instructions 204 sont des instructions permettant de déterminer un pilotage du réseau 100. Autrement dit, les instructions 204 permettent de déterminer une configuration et des valeurs de pression et de débit pour les postes 106 et 110. En particulier, les instructions 204 sont adaptées à la topologie du réseau 100 et intègrent par conséquent un modèle topologique du réseau 100 ainsi qu'un modèle de perte de charge.

Le modèle de perte de charges, intégré dans les instructions 204, décrit alors les pertes de charge dues aux frottements entre le fluide et les parois des canalisations 102 ainsi que celle dues à des variations d'altitude dans le réseau 100.

A titre d'exemple, chaque nœud du réseau est libellé par un indice, par exemple une valeur entière. Dans la suite de la description, on note $d_{i,j}$ le diamètre, en mm, de la canalisation reliant les nœuds $i$ et $j$ ; $l_{i,j}$ sa longueur, en km ; $\mu_{i,j}$ sa rugosité interne, en micron. A titre d'exemple, la rugosité absolue d'une canalisation neuve en polyéthylène est représentée par une valeur de 7 microns et de 12 microns pour les canalisations en acier. Ces valeurs en microns sont données à titre d'exemple et ne sont qu'un choix de modélisation. La personne du métier saura adapter ces valeurs à des modèles de canalisations plus fines ou plus larges. On introduit, de plus, la quantité $P_{i,j}$ représentant la pression moyenne en bar, circulant dans la canalisation reliant les nœuds $i$ et $j$ et la quantité $Q_{i,j}$ représentant le débit volumétrique, en $Nm^3/h$, circulant dans cette canalisation.

Dans l'exemple où le réseau 100 est un réseau de gaz, la perte de charge entre les nœuds $i$ et $j$, notée $P_i^2 - P_j^2$ et exprimée en $bar^2$ suit la loi de Bass étendue, dérivée de l'équation classique de Darcy-Weisbach et est définie par l'équation suivante :

[Math 1]

$$P_i^2 - P_j^2 = \frac{16.10^{15}\rho_a p_0}{3600^2.10^5\pi^2 z_0 T_0} d_0 T_m Z_{ij} \lambda_{ij} \frac{l_{ij}}{d_{ij}^5} Q_{ij}|Q_{ij}| + 2 P_{ij}^{m^2}\left(\frac{\rho_0 z_0 T_0}{P_0 Z_{ij}T_m}\right)g\Delta z,$$

où les coefficients fixes sont :

-   $Z_{ij}$ étant un facteur de compressibilité du gaz, considéré comme étant constant et par exemple fixé à 0,0097 ;
-   $\rho_a$ représentant la densité de l'air en $kg/m^3$ dans les conditions normales de températures et de pressions, par exemples prises à 1 013 bars et 273,15 kelvins ;
-   $d_0$ représentant la densité, en $kg/m^3$, du gaz circulant dans la canalisation ;

- $T_m$ représentant la température, en kelvins, du gaz circulant dans la canalisation ;
- $T_0$ représentant une valeur de température de référence, par exemple 273,15 kelvins ;
- $z_0$ étant un facteur de compressibilité, par exemple fixé à la valeur 1 ;
- $p_0$ étant la pression de référence, par exemple fixée à 1 bar ;
- $g$ représentant l'accélération de la pesanteur, prise à 9,81 $m/s^2$ ;
- $\Delta z$ représentant la variation d'altitude globale sur la canalisation ;
- $\rho$ représentant la densité du gaz circulant dans la canalisation ; et
- $\tilde{\mu}$ étant la viscosité dynamique du gaz circulant dans la canalisation, par exemple fixée, pour le méthane dans des conditions normales de température et de pression, à $\mathbf{1,25.10^{-6} kg.m^{-1}s^{-1}}$.

Les variables intervenant dans l'équation précédente sont alors les grandeurs :

- $P_{ij}^m$ décrivant la pression moyenne, en bar, dans la canalisation ;
- $\lambda_{i,j}$ décrivant un terme de frottement de charge régulier dans la canalisation ; et
- $Q_{i,j}$ le débit volumétrique décrit précédemment.

En particulier, la variable $\lambda_{i,j}$ est exprimée par une approximation explicite standard de l'équation de Swamee-Jain et de l'équation de Colebrook-White.

A titre d'exemple, en régime turbulent, $\lambda_{i,j}$ est telle que :

[Math 2]

$$\lambda_{i,j} = \lambda_{i,j}^{\text{turb}} = \frac{1}{\left(2\log\left(\frac{\mu_{ij}}{3700\, d_{ij}} + \frac{5.74}{Re^{0.9}}\right)\right)^2},$$

où $Re$ est le nombre de Reynolds adimensionné à la canalisation, soit :

[Math 3]

$$Re = \frac{\rho\, v\, d_{ij}}{\tilde{\mu}},$$

où $v$ est une variable décrivant la vitesse propre du gaz dans la canalisation.

Dans un cas de régime laminaire, et non plus turbulent, $\lambda_{i,j}$ est tel que :

[Math 4]

$$\lambda_{i,j} = \lambda_{ij}^{lam} = \frac{64}{Re}.$$

A titre d'exemple, dans une zone transitoire laminaire-turbulent, la valeur $\lambda_{i,j}$ est calculée par interpolation entre les valeurs $\lambda_{i,j}^{turb}$ et $\lambda_{i,j}^{lam}$.

A titre d'exemples, dans les instructions 204, le modèle précédent est séparé en deux modèles distincts : un modèle pour les canalisations et un modèle de perte de charge. A titre d'exemple, une variable $c_{i,j}$ et une valeur $f_{i,j}$ correspondants aux coefficients de pertes de charge dans les canalisations sont, par exemple décrits, par le modèle de perte de charge et sont tels que :

[Math 5]

$$c_{ij} = \frac{16.10^{15} \rho_a p_0}{3600^2.10^5 \pi^2 z_0 T_0} d_0 T_m Z_{ij} \lambda_{ij} \frac{l_{ij}}{d_{ij}^5},$$

et

[Math 6]

$$f_{ij} = 2 \left( \frac{\rho_0 z_0 T_0}{P_0 Z_{ij} T_m} \right) g \Delta z.$$

La variable $c_{ij}$ et la valeur $f_{ij}$ sont ensuite introduites dans le modèle de canalisation. La perte de charge $P_i^2 - P_j^2$ est alors telle que :

[Math 7]

$$P_i^2 - P_j^2 = c_{ij} Q_{ij} |Q_{ij}| + f_{ij} P_{ij}^{m\,2}.$$

Dans un autre exemple, le réseau 100 est un réseau de chaleur. La perte de charge entre les nœuds $i$ et $j$, notée $P_i$-$P_j$ et exprimée en *bar* est définie, en gardant les mêmes notations que dans l'exemple précédent d'un réseau de gaz, par l'équation suivante :

[Math 8]

$$P_i - P_j = \frac{8\,\rho\,l_{ij}}{d_{ij}^5 \pi^2} \lambda_{ij} Q_{ij} |Q_{ij}| + \rho g \Delta z,$$

où le facteur $\lambda_{ij}$ est non linéaire et porte, dans cet exemple, la physique de la perte de charge dans la canalisation.
L'expression de la dynamique dans les canalisations passent également par la description de l'évolution de la température dans les canalisations. En particulier, en notant $\theta_i$ la température au noeud $i$ et $\theta_j$ la température au noeud $j$, l'équation portant sur la conservation de l'énergie dans la canalisation entre les nœuds $i$ et $j$ s'écrit :

[Math 9]

$$\theta_j = \theta_i exp(\frac{-l_{ij}}{\rho c_p |Q_{ij}| U_{ij}}),$$

où :

- $C_p$ est la capacité thermique massique de l'eau, et
- $U_{i,j}$ représente le terme principal pour les pertes thermiques en canalisation et est de la forme :

[Math 10]

$$U_{ij} = \frac{ln(4h/(r d_{ij}))}{2\pi \lambda_g} + \frac{ln(r)}{2\pi \lambda_{is}},$$

où :

- $h$ est la profondeur d'enfouissement de la canalisation,
- $r$ est le rapport entre le diamètre externe de l'isolant de la canalisation et le diamètre de la canalisation,
- $\lambda_{is}$ est la conductivité thermique de l'isolant, et
- $\lambda_g$ est la conductivité thermique du sol.

Le dispositif de calcul 200 comprend, par exemple, en outre un processeur 206 (CPU) relié à la mémoire non volatile 202 et à une mémoire volatile 208 (RAM) par l'intermédiaire d'un bus 210. Le processeur 206 est, par exemple, configuré pour exécuter les instructions 204.
Le dispositif de calcul 200 comprend, par exemple, en outre, une interface 212 (INTERFACE). A titre d'exemple, l'interface 212 est configurée pour transmettre le pilotage, ou le réglage, déterminé, lors de l'exécution des instructions 204, à un contrôleur (non illustré en figure 2) configuré pour piloter le réseau 100, sur la base du pilotage déterminé. A titre d'exemple, le contrôleur est un circuit de contrôle relié au circuit de calcul 200 par l'intermédiaire de l'interface 212. A titre d'exemple, le dispositif de calcul 200 et le circuit de contrôle font partie d'un même dispositif électronique et l'interface 212 prend, par exemple, la forme d'un bus. Dans d'autre exemple, le contrôleur est un dispositif externe au dispositif de calcul 200 et l'interface 212 est par exemple une interface USB (de l'anglais « Universal Serial Bus »), UART (de l'anglais « Universal Asynchronous Receiver-Transmitter »), etc.

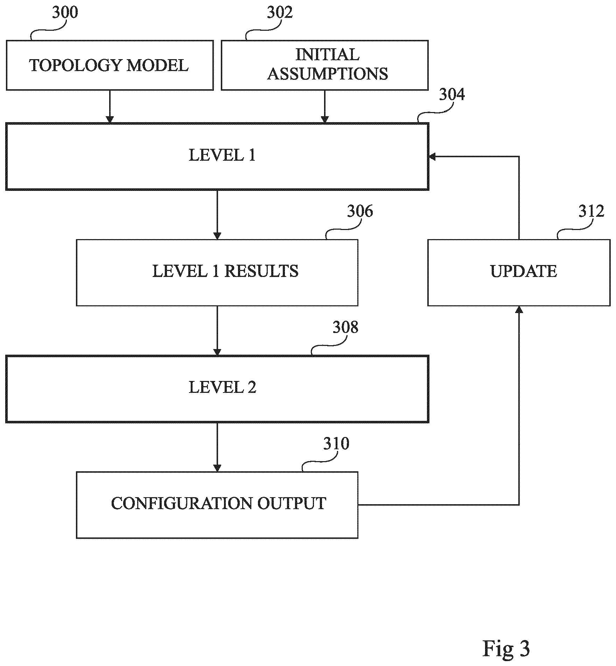

La figure 3 est un organigramme illustrant des étapes d'un procédé de pilotage, selon un mode de réalisation de la présente description. En particulier, les étapes décrites en relation avec la figure 3 sont, par exemple en partie, exécutées par le processeur 206 lors de l'exécution des instructions 204.

Une étape 300 (TOPOLOGY MODEL) comprend par exemple, la modélisation de la topologie du réseau 100. A titre d'exemple, la modélisation du réseau s'effectue par l'intermédiaire d'un logiciel de modélisation, et par exemple par l'intermédiaire d'un ordinateur. A titre d'exemple, le modèle topologique est intégré dans les instructions 204.

Dans une étape 302 (INITIAL ASSUMPTION), pour chaque canalisation reliant une paire de nœuds $i$ et $j$ du réseau 100, les coefficients de perte de charge $c_{i,j}$ et $f_{i,j}$ du modèle de canalisation sont initialisés. A titre d'exemple, l'initialisation des coefficients de perte de charges se fait par des valeurs prédéterminées, par exemple suite à une étude, une simulation ou via des valeurs pars défaut. A titre d'exemple, les valeurs par défaut sont des valeurs inexactes, ne correspondant pas à la réalité. Lors de la réalisation de l'étape 302, la configuration du réseau est aussi initialisée. A titre d'exemple, cette configuration initiale correspondant à une configuration dans laquelle toutes les vannes sont en position ouverte et dans laquelle tous les postes 106 à 110 sont aussi dans un état de fonctionnement.

Dans une étape 304 (LEVEL 1), postérieure à la réalisation des étapes 300 et 302, un premier niveau de calculs est réalisé par le dispositif de calcul 200. Le premier niveau de calcul correspond à la résolution d'un problème de type NLP (de l'anglais « Non Linear Programming »).

Selon un mode de réalisation, le problème de type NLP se résout alors sur la base du modèle de canalisation décrit précédemment et des coefficients de pertes de charge. Les coefficients de perte de charge sont alors mis à jour à posteriori en fonction des valeurs des débits et pressions calculées. Au premier lancement d'un algorithme itératif décrivant la résolution d'un problème NLP, des hypothèses sur les coefficients de pertes de charge sont faites. Ces hypothèses risquent, par exemple, d'être inexactes et de ne pas correspondre à la réalité. Par exemple, des valeurs initiales pour les coefficients de perte de charge, favorisant l'écoulement avec des pertes de charge très faible, par exemple de l'ordre de $10^{-10}$, sont choisies. Les valeurs sont ensuite corrigées et mises à jour à chaque itération de l'algorithme. La correction et la mise à jour des valeurs s'effectuent en fonction des résultats pour une itération précédente et sont utilisées pour l'itération suivante dans le modèle canalisation.

En particulier, le problème NLP se résout alors sur la base des modèles de canalisations et perte de charges décrits en relation avec la figure 2 et sur les coefficients de perte de charges fixés et de la configuration initiale déterminée lors de l'étape 302. La résolution du problème NLP vise alors à estimer des paramètres pour le pilotage du réseau 100, c'est à dire à estimer des valeurs les pressions et débits à appliquer au niveau des postes sources 106 et les pressions à appliquer au niveau des postes de détente et/ou compression 110. La résolution du problème NLP s'effectue donc sur la base des initialisations effectuées lors de l'étape 302 et ne comprend donc ni d'estimation des coefficients de perte de charge, ni de détermination d'une nouvelle configuration.

Généralement, le modèle de canalisations et le modèle de perte de charge sont utilisés dans la résolution du problème NLP. L'équation dite Darcy-Weisbach est alors directement utilisée dans le problème NLP. Le problème NLP se résout alors en une unique une itération. Cependant, l'équation de Darcy-Weisbach étant non linéaire et non convexe, la résolution du problème NLP est alors très couteuse voire impossible pour traiter des grands réseaux.

Le calcul des coefficients de pertes de charge à posteriori avec un processus itératif, séparant ainsi le modèle de canalisations du modèle de perte de charge, permet alors d'outrepasser la complexité de la résolution du problème NLP intégrant le modèle de canalisations et le modèle de perte de charges.

Dans une étape 306 (LEVEL 1 RESULTS), les résultats, c'est à dire les pression et/ou débit estimées par résolution du problème NLP, sont utilisés pour, par exemple, réévaluer, en posttraitement, les coefficients de perte de charge. Les coefficients de perte de charge réévalués sont alors utilisés pour mettre à jour le modèle de canalisation. A titre d'exemple, la commande de cette mise à jour est comprise dans les instructions 204.

A titre d'exemple, le premier niveau de calcul est itératif, c'est à dire que suite à la réalisation de l'étape 306, le procédé reprend par exemple à l'étape 304 afin de raffiner les estimations. A titre d'exemple, le procédé boucle entre les étapes 304 et 306 jusqu'à ce qu'obtenir convergence du premier niveau de calcul.

Suite à la réalisation de l'étape 306, le procédé continue dans une réalisation d'une étape 308 (LEVEL 2). L'étape 308 consiste en une remise en cause de la configuration initiale choisie lors de la réalisation de l'étape 302. Durant la réalisation de l'étape 308, un deuxième niveau de calcul est exécuté par le dispositif de calcul 308. Le deuxième niveau de calcul consiste alors en la résolution d'un problème de type MINLP (de l'anglais « Mixed Integer Non Linear Problem ») sur la base des coefficients de perte de charges réévalués lors de la réalisation de l'étape 306, afin de vérifier, ou questionner, l'existence d'une autre configuration décrivant un réseau plus proche des critères et contraintes fixées. A titre d'exemple, le problème MINLP est le même que le problème NLP excepté en ce que des variables dites binaires relatives à l'état de fonctionnement des composants robinet et postes de détente/compression sont activées. Dans la résolution du problème NLP, ces variables binaires sont, par exemple, fixées à 1, correspondant à l'état de fonctionnement. La résolution du problème MINLP s'effectue en outre sur la base d'une fonction objectif. A titre d'exemple, une fonction objectif est une fonction décrivant un objectif dans le pilotage recherché. A titre d'exemple, dans le cas d'un réseau de gaz, l'objectif visé est par exemple de maximiser l'injection de biométhane dans le réseau 100.

Dans une étape 310 (CONFIGURATION OUTPUT), une valeur d'objectif de la nouvelle configuration est calculée, par le dispositif de calcul 200, par application de la fonction objectif. La valeur d'objectif est par exemple comparée à la valeur d'objectif associée à la configuration utilisée lors de l'étape 304.

A titre d'exemple, lors de la réalisation de l'étape 310, les coefficients de pertes de charge sont à nouveau réévalués, en prenant en compte la nouvelle configuration.

A titre d'exemple, si la valeur d'objectif de la nouvelle configuration est meilleure que celle de la configuration utilisée lors de la réalisation de l'étape 304, le procédé continu dans une étape 312 (UPDATE), dans laquelle la configuration précédemment utilisée pour le modèle de canalisation dans lors de la réalisation de l'étape 304 est remplacée par la nouvelle configuration. Les coefficients de pertes de charges du modèle de canalisation sont, par exemple, mis à jour avec les coefficients réévalués lors de la réalisation de l'étape 310.

Suite à l'étape 312, le procédé reprend par exemple dans une nouvelle réalisation de l'étape 304, dans laquelle les pressions et/ou débit des postes 106 à 114 sont à nouveau estimés sur la base de la nouvelle configuration et des coefficients de perte de charges réévalués.

Dans un autre exemple, lorsque la valeur d'objectif de la nouvelle configuration n'est pas améliorée par rapport à la valeur d'objectif de la configuration à partir de laquelle a été réalisée l'étape 304 précédente, le procédé se termine. Dans cet exemple, les coefficients de perte de charges ne sont pas réévalués. Dans ce cas, le pilotage amélioré déterminé est caractérisé par les débits et/ou pressions à appliquer aux postes 106 à 110 obtenus lors de la dernière réalisation de l'étape 306 et par la configuration utilisée lors de la dernière réalisation de l'étape 306. A titre d'exemple, le dispositif de calcul 200 transmet alors le pilotage obtenu vers, par exemple, un dispositif de contrôle du réseau 100 afin de commander le transport du fluide des postes sources 106 vers les postes de destination 108 concernés.

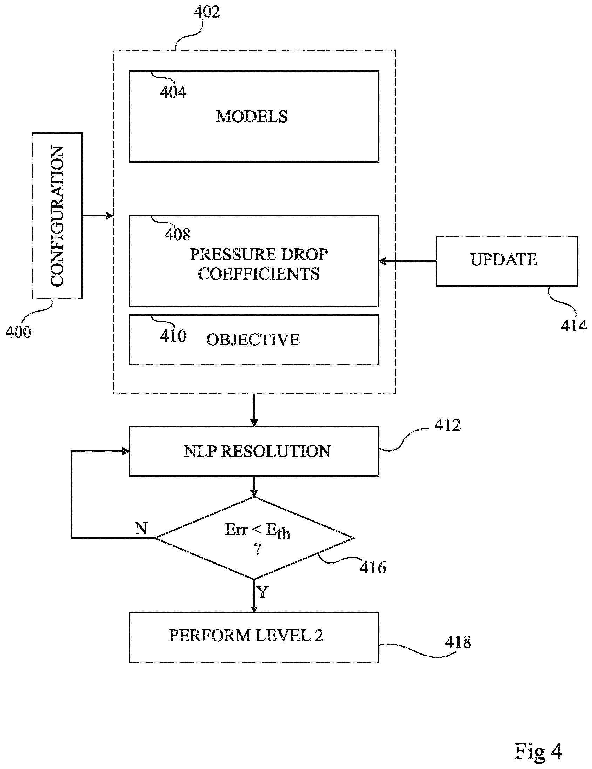

La figure 4 est un organigramme illustrant des étapes du premier niveau de calcul dans le procédé de pilotage décrit en relation avec la figure 3. En particulier, la figure 4 illustre plus en détail les étapes 304 et 306 selon un exemple de réalisation.

Dans une étape 400, correspondant à une partie de l'étape 302, une configuration initiale est établie. A titre d'exemple, la configuration initiale définit une configuration dans laquelle toutes les vannes 104 sont ouvertes et dans laquelle tous les postes 106 à 110 sont en état de fonctionnement.

La configuration initiale est alors fournie au modèle de canalisation, initialisé dans une étape 402. L'étape 402 reprend, par exemple, des éléments des étapes 300 et 302.

L'étape 402 comprend, par exemple, l'intégration des modèles de canalisation et de perte de charges dans les instructions 204 lors d'une sous étape 404 (MODELS).

Dans une sous étape 408 (PRESSURE DROP COEFFICIENTS), les coefficients de perte de charges, pour chacune des canalisations, sont initialisés tels que décrit en relation avec l'étape 302.

Dans une sous étape 410 (OBJECTIVE), une fonction objectif pour le problème NLP est déterminée et est intégré aux instructions 204. A titre d'exemple, dans le cas d'un réseau de gaz, la fonction objectif maximise l'injection de biométhane dans le réseau 100.

Les étapes 400 et 402 sont, par exemple, réalisées au moment de la programmation des instructions 204. Autrement dit, les étapes 400 et 402 sont réalisées de manière indépendante à l'estimation des paramètres de pilotage et en amont de l'exécution des instructions 204 par le dispositif de calcul 200.

Suite aux étapes d'initialisation 400 et 402, le premier niveau de calcul continu dans une réalisation d'une étape 412 (NLP RESOLUTION). Le problème NLP consiste alors à estimer les pressions et débit à appliquer aux postes 104 à 110, à partir de la configuration initiale fixée dans l'étape 400 et des paramètres initialisés lors de la réalisation de l'étape 402.

La réalisation de l'étape 412 comprend, en outre, une nouvelle estimation, ou réévaluation, des coefficients de perte de charges pour chaque canalisation. Cette nouvelle estimation ou réévaluation est, par exemple, réalisée en posttraitement de la résolution du problème NLP. Les coefficients de perte de charges réévalués sont par exemple mis à jour dans le modèle de canalisation lors de la réalisation d'une étape 414 (UPDATE).

Dans une étape 416 (*Err* < $E_{th}$ ?), une valeur d'erreur associée aux paramètres de pilotage est calculée par le dispositif de calcul. A titre d'exemple, la valeur d'erreur est une valeur d'erreur maximale en débit et en pression moyennes sur les canalisations entre les paramètres calculés lors de la réalisation de l'étape 412 précédente et les paramètres initiaux. La valeur d'erreur est alors comparée à une valeur d'erreur seuil, fixée en amont. A titre d'exemple, la valeur d'erreur seuil est comprise entre 0,0005 et 0,005 bar, par exemple égale à 0,001 bar.

Dans le cas où la valeur d'erreur est inférieure à la valeur d'erreur seuil (branche Y), le premier niveau de calcul se termine dans une réalisation d'une étape 418 (PERFORM LEVEL 2). A titre d'exemple, la réalisation de l'étape 418 correspond à l'exécution d'une instruction provoquant la réalisation de l'étape 308.

Dans le cas où la valeur d'erreur est supérieure à la valeur d'erreur seuil (branche N), le procédé reprend à l'étape 412 dans une nouvelle résolution du problème NLP. Cette nouvelle résolution du problème NLP s'effectue cette fois à partir des coefficients de pertes de charge réévalués et mis à jour dans le modèle de canalisation lors de l'étape 414 précédente. Les pressions et débit à appliquer aux postes 104 à 110 sont alors à nouveau déterminés et les coefficients de perte de charges sont alors réévalués puis mis à jour dans le modèle de canalisation. A titre d'exemple, les pressions et débit à appliquer aux postes 104 à 110 sont alors estimées sur la base des pressions et débit estimés lors de la dernière réalisation de l'étape 412. La comparaison ensuite effectuée, lors d'une nouvelle réalisation de l'étape 416, est faite entre les valeurs d'erreurs calculées à partir des pressions et débit à appliquer obtenus lors des deux dernières réalisations de l'étape 412.

Le premier niveau de calcul est donc par exemple un procédé de calcul itératif, les pressions et débit à appliquer aux postes 104 à 110 et les coefficients de perte de charges étant réévalués sur la base des résultats de l'itération précédente jusqu'à la convergence du procédé, c'est à dire jusqu'à ce que les valeurs d'erreurs entre deux itérations successives diffèrent d'au plus de la valeur d'erreur seuil.

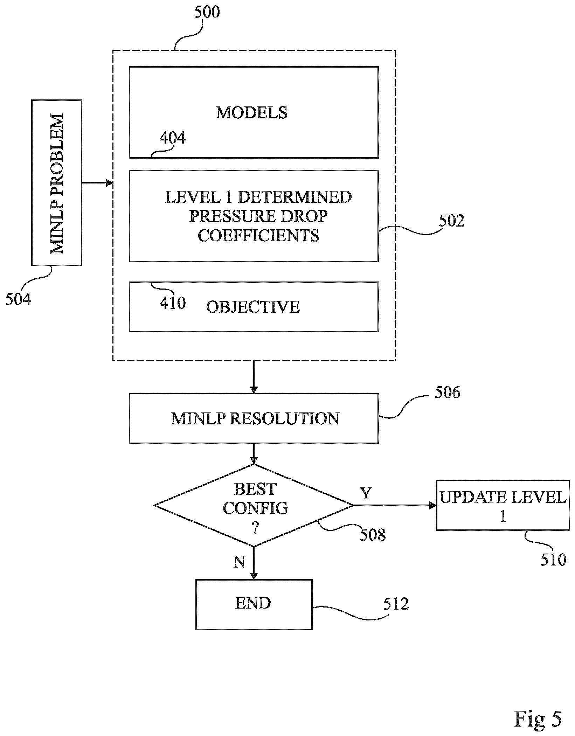

La figure 5 est un organigramme illustrant des étapes du deuxième niveau dans le procédé de pilotage, selon un mode de réalisation de la présente description. En particulier, le deuxième niveau est réalisé suite à la réalisation de l'étape 418.

Une étape 500 comprend l'initialisation du deuxième niveau de calcul. En particulier, l'initialisation comprend, par exemple, l'intégration des modèles de canalisation et de perte de charges dans les instructions 204. A titre d'exemple, les modèles sont les mêmes que ceux implémentés pour la réalisation de l'étape 404.

Une fonction objectif, par exemple la même fonction que celle déterminée dans l'étape 410, est intégrée aux instructions 204 implémentant le deuxième niveau de calcul.

L'étape d'initialisation 500 comprend en outre une sous étape 502 (LEVEL 1 DETERMINED PRESSURE DROP COEFFICIENTS), dans laquelle les coefficients de perte de charges, pour chacune des canalisations, sont initialisés aux coefficients de perte de charges résultants de l'issue du premier niveau de calcul. Les pressions et débits à appliquer aux postes 106, 108 et 110sont en outre initialisés aux valeurs résultantes de l'issue du premier niveau de calcul.

Le problème MINLP 504 (MINLP PROBLEM) est identique au problème NLP, excepté en ce que l'hypothèse sur la configuration du premier niveau de calcul est remise en cause. Des variables dites binaires relatives à l'état de fonctionnement des robinets 106 et des postes de détente/compression 110 sont activées afin de définir une configuration initiale pour la résolution du problème MINLP. En effet, pour la résolution du problème NLP, ces variables binaires étaient, par exemple, fixées à 1, traduisant un état de fonctionnement A titre d'exemple, une valeur d'objectif de référence est calculée, par le dispositif de calcul, sur la base de la fonction objectif et de la configuration initiale du problème MINLP 504.

Dans une étape 506 (MINLP RESOLUTION), le problème MINLP consistant à déterminer une nouvelle configuration de l'états des vannes 104 et postes 106 à 110, à partir de toutes les valeurs, paramètres et coefficients initialisés lors des étapes 500 et 504, est résolu.

Dans une étape 508 (BEST CONFIG ?) une valeur d'objectif est calculée. A titre d'exemple, la valeur d'objectif est calculée à partir de la fonction objectif de la nouvelle configuration obtenue lors de l'étape 506. Une configuration sera considérée comme meilleure qu'une autre si, dans un contexte de fonction objectif à minimer, respectivement à maximiser, sa valeur d'objectif est inférieure, respectivement supérieure à la valeur associée à l'autre configuration.

Dans le cas où la nouvelle configuration est meilleure que la configuration 504 (branche Y), les coefficients de pertes de charge, ainsi que la configuration et mis à jour pour le problème NLP. Si le résultat de la fonction objectif du problème MINLP est meilleure que celui calculé pour le problème NLP, les coefficients de pertes de charge sont remplacés pr ceux calculés lors de l'étape 510 et la configuration du problème NLP est remplacée par la configuration trouvée par la résolution du problème MINLP. L'estimation des paramètres de pilotage continue alors dans une étape 510 (UPDATE LEVEL 1) dans laquelle la nouvelle configuration est fournie comme configuration initiale au premier niveau de calcul. Le procédé itératif décrit en relation avec la figure 4 est réalisé une nouvelle fois, mais cette fois, à partir de la nouvelle configuration, déterminée par résolution du problème MINLP. A titre d'exemple, les coefficients de perte de charges sont en outre réévalués, en posttraitement de l'étape 506 et sur la base de la nouvelle configuration et sont également utilisés lors de l'initialisation des coefficients de pertes de charges décrit en relation avec l'étape 408. La nouvelle réalisation du procédé décrit en relation avec la figure 4 fournit alors, pour la nouvelle configuration, de nouveaux débits et pressions à appliquer et de nouveaux coefficients de perte de charge réévalués. Ces coefficients et paramètres seront ensuite utilisés pour réaliser de nouveau le deuxième niveau de calcul afin de déterminer, si c'est possible et par résolution d'un problème MINLP, encore une nouvelle configuration. Lors de cette deuxième réalisation du deuxième niveau de calcul, la configuration 504 sera alors la configuration précédemment déterminée et utilisé lors de la dernière réalisation du premier niveau de calcul.

Dans le cas où la nouvelle configuration n'est pas meilleure (branche N en sortie du bloc 508), le deuxième niveau de calcul se termine par exemple dans une étape 512 (END). Les paramètres de pilotage retenus sont alors ceux obtenus à l'issu de la dernière réalisation du premier niveau de calcul et correspondent à la configuration 504 courante et aux pressions et débits estimés lors de la dernière réalisation du premier niveau de calcul. En effet, dans ce cas, la configuration 504 courante a été déterminée comme étant meilleure que celle obtenue suite à la résolution du problème MINLP. A titre d'exemple, les paramètres de pilotages sont transmis au circuit de contrôle du réseau 100 afin de faire transiter le fluide des postes sources 106 vers les postes de destination 108.

Le deuxième niveau de calcul permet de vérifier la pertinence de la solution trouvée lors du premier niveau de calcul. Le deuxième niveau de calcul est omis si, par exemple, les positions des robinets 104 sont connues par un gestionnaire du réseau. Dans un autre exemple, le deuxième niveau de calcul est omis afin d'accélérer l'estimation des paramètres de pilotage.

Un avantage des modes de réalisation décrits est que la configuration du réseau est estimée séparément des valeurs de pressions et de débits à appliquer aux différents postes. Ainsi, cela permet d'estimer les pressions et débits en résolvant un problème de type NLP, bien moins complexe et couteux que la résolution d'un problème de type MINLP visant à estimer les pressions et débits et une configuration.

Un autre avantage des modes de réalisation décrits est que le problème de type MINLP, visant à estimer une configuration, n'est pas itératif. Ainsi, les itérations permettant de vérifier la convergence du modèle sont réalisées sur la base du problème de type NLP.

Un autre avantage des modes de réalisation décrits est qu'ils permettent de déporter le calcul des coefficients de pertes de charge du modèle d'optimisation NLP en les réalisant à posteriori en dehors du modèle d'optimisation NLP. La résolution du problème NLP est alors plus facile et le processus itératif permet de coller le modèle NLP à la physique du réseau. En d'autres termes, le problème NLP est résolu en une seule itération. Ainsi, un dispositif de traitement tel qu'une machine à ressources limitées est capable de résoudre le probleme NLP.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le type de réseau auquel s'applique le procédé d'estimation de paramètre de pilotage peut varier. En effet, le réseau considéré peut, entre autres, être, un réseau de gaz, d'hydrogène, de chaleur, d'eau etc. De plus la résolution en deux niveaux de calcul peut s'appliquer en outre à la recherche de réglage pour une conduite améliorée de réseaux d'eau avec, par exemple, des critères économique, écologique, etc. De manière générale, la mise en œuvre du procédé est réalisable sur tout problèmes de réglage et/ou de pilotage de réseaux énergétiques fluide, et la résolution est basée sur un problème de type MINLP.

Enfin, la mise en œuvre pratique des modes de réalisation et variantes décrits est à la portée de la personne du métier à partir des indications fonctionnelles données ci-dessus.

## Revendications

1. Procédé d'estimation, par un dispositif de calcul (200), de paramètres de pilotage et/ou de réglage d'un réseau (100) configuré pour transporter un fluide, depuis au moins un poste source (106) du réseau vers au moins un poste de destination (108) du réseau et par l'intermédiaire d'au moins une canalisation (102), le réseau comprenant au moins un robinet (104) et/ou au moins un poste de détente et/ou de compression (110), le procédé comprenant :

   a) la détermination d'une configuration initiale des états binaires de l'au moins un robinet et/ou de l'au moins un poste de détente et/ou compression et/ou de l'au moins un poste source ;
   b) l'initialisation de coefficients de perte de charges associés à l'au moins une canalisation ;
   c) une première estimation des paramètres, sur la base de la configuration initiale,
   d) la mise à jour, à postériori, des coefficients de perte de charges, par le dispositif de calcul, sur la base de la première estimation des paramètres ;
   e) la recherche d'une nouvelle configuration des états binaires, sur la base des coefficients de perte de charge mis à jour ;
   f) une deuxième estimation des paramètres, sur la base de la nouvelle configuration ; et
   g) la fourniture de la deuxième estimation des paramètres à un poste de pilotage du réseau.

2. Procédé selon la revendication 1, dans lequel la première estimation s'effectue par résolution d'un problème de programmation non linéaire (NLP), par le dispositif de calcul (200), sur la base de la configuration initiale et d'un modèle de canalisation décrivant le réseau.

3. Procédé selon la revendication 1 ou 2, dans lequel la configuration initiale correspond à une configuration dans laquelle l'au moins un robinet (104) et/ou l'au moins un poste de détente et/ou compression (110) et/ou l'au moins un poste source (108) sont dans un état fixé, par exemple dans un état de fonctionnement, ou de non-fonctionnement.

4. Procédé selon l'une quelconque des revendications 1 à 3, comprenant en outre, suite à l'étape d), une nouvelle réalisation de l'étape c) aboutissant à une nouvelle première estimation des paramètres, sur la base de la configuration initiale.

5. Procédé selon la revendication 4, comprenant en outre, suite à la réalisation de l'étape d) :

- le calcul, par le dispositif de calcul (200), d'une première valeur d'erreur associée à la première estimation des paramètres ;
- la comparaison de la première valeur d'erreur avec une première valeur seuil ; et
- si la première valeur d'erreur est supérieure à la première valeur seuil, une nouvelle réalisation de l'étape c).

6. Procédé selon l'une quelconque des revendications 1 à 5, dans lequel la recherche de la nouvelle configuration s'effectue par résolution d'un problème de programmation non linéaire en nombres entiers mixtes (MINLP), par le dispositif de calcul (200), sur la base des coefficients de perte de charge mis à jour.

7. Procédé selon l'une quelconque des revendications 1 à 6, comprenant en outre, suite à la réalisation de l'étape e) :

- le calcul, par le dispositif de calcul (200), d'une valeur d'objectif associée à la nouvelle configuration ;
- la comparaison de la valeur d'objectif avec une valeur d'objectif associée à la configuration initiale ; et
- si la valeur d'objectif associée à la nouvelle configuration est meilleur que la valeur d'objectif associée à la configuration initiale (504), la reprise du procédé dans une nouvelle réalisation de l'étape c), avec comme configuration initiale la nouvelle configuration.

8. Procédé selon la revendication 7 dans sa dépendance à la revendication 6, dans lequel les valeurs d'objectif sont calculées, par le dispositif de calcul (200), sur la base d'une fonction objectif associée au problème de programmation non linéaire en nombres entiers mixtes.

9. Procédé selon l'une quelconque des revendications 1 à 8, comprenant en outre, suite à l'étape e), une nouvelle mise à jour des coefficients de perte de charge, sur la base de la nouvelle configuration.

10. Procédé selon l'une quelconque des revendications 1 à 9, dans lequel le réseau (100) est un réseau de gaz comprenant, par exemple, au moins 500 canalisations (102).

11. Procédé selon l'une quelconque des revendications 1 à 9, dans lequel le réseau (100) est un réseau de chaleur comprenant, par exemple, au moins 500 canalisations (102).

12. Procédé selon l'une quelconque des revendications 1 à 11, dans lequel les paramètres correspondent à des valeurs de pression et/ou débit au niveau de l'au moins un poste sources (106) et des valeurs de pression au niveau de l'au moins un poste de détente et/ou compression (110).

13. Dispositif de calcul comprenant :

- une mémoire non volatile (202) configurée pour stocker des instructions (204) implémentant le procédé d'estimation de paramètres de pilotage et/ou de réglage d'un réseau (100) selon l'une quelconque des revendications 1 à 12 ;
- un processeur (206) configuré pour exécuter les instructions ;
- une interface (212) configurée pour fournir les paramètres estimés à un dispositif de contrôle du réseau.

Fig 1

200

CPU ⌇206

RAM ⌇208

210

202

NV MEM 204

INSTRUCTIONS

212

INTERFACE

Fig 2

300
TOPOLOGY MODEL

302
INITIAL ASSUMPTIONS

304
LEVEL 1

306
LEVEL 1 RESULTS

312
UPDATE

308
LEVEL 2

310
CONFIGURATION OUTPUT

Fig 3

Fig 4

500

MODELS

404

502

LEVEL 1 DETERMINED
PRESSURE DROP
COEFFICIENTS

MINLP PROBLEM

504

410    OBJECTIVE

506

MINLP RESOLUTION

BEST
CONFIG
?

Y

UPDATE LEVEL
1

508

510

N

END

512

Fig 5

| | Europäisches Patentamt European Patent Office Office européen des brevets | **RAPPORT DE RECHERCHE EUROPEENNE** | Numéro de la demande EP 25 16 8994 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FELIX HENNINGS ET AL: "Optimizing transient gas network control for challenging real-world instances using MIP-based heuristics", ARXIV.ORG, CORNELL UNIVERSITY LIBRARY, 201 OLIN LIBRARY CORNELL UNIVERSITY ITHACA, NY 14853, 13 juin 2022 (2022-06-13), XP091245421, * le document en entier * | 1-13 | INV. G05B17/02 G06Q10/0637 G06Q50/06 G06Q10/04 |
| X | CN 117 454 551 A (UNIV SOUTHWEST PETROLEUM) 26 janvier 2024 (2024-01-26) | 1,13 | |
| A | * le document en entier * | 2-12 | |

DOMAINES TECHNIQUES RECHERCHES (IPC)

G05B
G06Q
G06F

Le présent rapport a été établi pour toutes les revendications

| Lieu de la recherche | Date d'achèvement de la recherche | Examinateur |
|---|---|---|
| La Haye | 1 mai 2025 | Antonopoulos, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 16 8994

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-05-2025

| Document brevet cité au rapport de recherche | Date de publication | Membre(s) de la famille de brevet(s) | Date de publication |
|---|---|---|---|
| CN 117454551 A | 26-01-2024 | AUCUN | |

EPO FORM P0460

Pour tout renseignement concernant cette annexe : voir Journal Officiel de l'Office européen des brevets, No.12/82